# EUROPEAN PATENT SPECIFICATION

(11) **EP 1 419 877 B1**
(45) Date of publication and mention of the grant of the patent: **07.06.2006**
(21) Application number: 04003396.1
(22) Date of filing: 30.03.2000
(51) Int. Cl.: B29D 30/38

(54) **Supply method of belt member**
Verfahren zum Zuführen von Gürtellagen
Procédé pour l'alimentation de nappes d'armature

(30) Priority: 30.03.1999 JP 8800599
(43) Date of publication of application: 19.05.2004
(62) Divisional of application: 00106077.1
(73) Proprietor: THE YOKOHAMA RUBBER CO., LTD., Tokyo (JP)
(72) Inventor: Okada, Noboru, c/o The Yokohama Rubber Co.,Ltd., Hiratsuka-shi Kanagawa-Ken (JP); Hasegawa, Haruhisa c/o The Yokohama Rubber Co.,Ltd, Hiratsuka-shi Kanagawa-Ken (JP); Take, Toshihiko, c/o The Yokohama Rubber Co.,Ltd., Hiratsuka-shi Kanagawa-Ken (JP)
(74) Representative: HOFFMANN EITLE

(56) References cited:
- EP-A- 0 714 758
- EP-A- 0 904 959
- GB-A- 1 348 254
- US-A- 3 898 116
- US-A- 4 875 959

## Description

### Background of the Invention:

The present invention relates to a supply method of a belt member, and in particular to a supply method of a belt member enabling to produce and efficiently supply a belt member having one tire peripheral length to a belt formation process.

Conventionally, when supplying a belt member of a pneumatic radial tire to a belt formation process, a broad sheet material, made up with a number of lined reinforcing cords coated with unvulcanized rubber, is cut on the bias to a belt width with a predetermined angle, and these bias-cut sheet sections are processed into a long-scale belt material by splicing so that their cut ends form right and left edges. The belt material is wound to a cell and stocked.

When forming a tire, the long-scale belt material is drawn out from the cell and cut along reinforcing cords to a length corresponding to a tire peripheral length so as to get a belt member for one tire.

However, since belt members, each being prepared for forming one tire, differ not only in width and length according to tire sizes but in cord angle according to tire specifications, belt members formed as above should be stocked as belt members with different dimensions for each tire specification. Thus, since many types of belt members are prepared as intermediate members, there have been problems such that a wide stock space or an intermediate stock are required and that it is not easy to meet small-lot productions.

Moreover, in the conventional method there are problems such that, since installation of a measuring unit or a cutting unit is necessary for cutting a long belt material to a predetermined size in a belt formation process, a high facility cost is required and maintenance takes much time and labor.

In common with the present invention, GB-A-1348254 discloses a supply method of a belt member comprising the steps of: forming a plurality of strip sections by cutting a strip material, made up with reinforcing cords coated with unvulcanized rubber, to a predetermined length with a predetermined angle; producing a belt member having one tire peripheral length by slicing an integer number of the strip sections under a lined condition in order on a carrier-conveyer; and forming the belt member into a continuous band.

EP-A-0 714 758 shows a plurality of belt members being stored on winding means.

US-A-4 875 959 considers a method for forming a pile from a plurality of belts.

According to a first aspect of the present invention, there is provided a supply method of a belt member, comprising the steps of:
forming a plurality of strip sections by cutting a strip material, made up with reinforcing cords coated with unvulcanized rubber, to a predetermined length with a predetermined angle, producing a belt member having one tire peripheral length by splicing an integer number of the strip sections under a lined condition in order on a carrier-conveyer; directly supplying the belt member having one tire peripheral length via an intermediate conveyer to a winding means; winding the belt member by the winding means with a liner in production order; and supplying the belt member from the winding to a belt formation process.

According to a second aspect of the present invention, there is provided a supply method of a belt member, comprising the steps of:
forming a plurality of strip sections by cutting a strip material, made up with reinforcing cords coated with unvulcanized rubber, to a predetermined length with a predetermined angle (θ); producing a belt member having one tire peripheral length by splicing an integer number of the strip sections under a lined condition in order; on a carrier-conveyer; directly supplying the belt member having one tire peripheral length via an intermediate conveyer to a stocker; piling the belt member on the stocker with separators in production order; and supplying the belt member from the stocker to a belt formation process.

As described above, according to the present invention, a strip material is cut to a predetermined size and spliced to form a belt member for one tire, and the belt member for one tire is either directly supplied to a belt formation process by way of a conveyer, or once stocked as a winding, or loaded by being piled up on a stocker with separators, and supplied to the belt formation process in order, as needed. Because of this, it is economical since a stock space or an intermediate storage which otherwise is required by conventional methods is not necessary, and facility costs can be reduced by discarding a cutting unit or a measuring unit in the belt formation process, and further it is also possible to meet small-lot productions.

According to the present invention, belt members with the same specification may continuously be produced in a belt member production process, but in order to cope with small-lot productions, it is preferable to continuously form belt members of different specifications by each lot. In this case, belt members of different specifications are mixed and stocked on the winding means or the stocker.

### Brief Description of the Drawings:

Fig. 1 is a schematic plan of a belt member formation system for executing a belt member supply method.
Fig. 2 is a schematic plan of a belt member formation system for executing one embodiment of the belt member supply method of the present invention.
Fig. 3 is a schematic plan of a belt member formation system for executing a second embodiment of the belt member supply method of the present invention.

### Detailed Description:

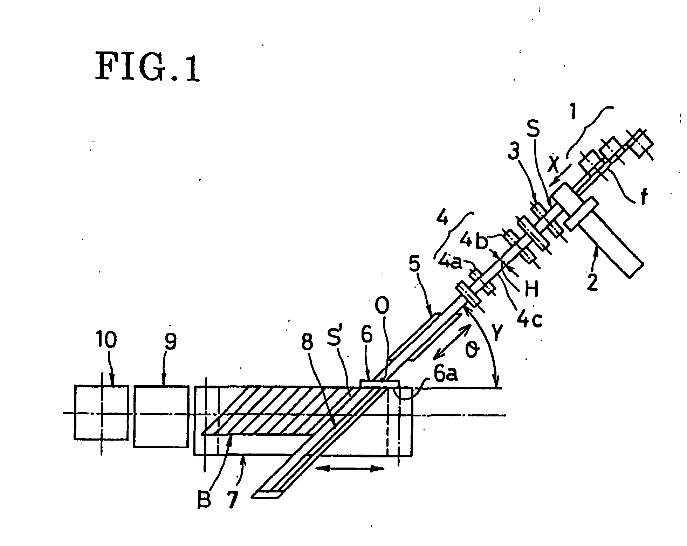

Fig. 1 shows a schematic plan view of a belt member formation system for executing the belt member supply method which is useful for understanding the present production process. In Fig. 1, a reference numeral 1 is a creel stand for supplying a plurality of reinforcing cords f of steel cords, a reference numeral 2 is a rubber coating unit for coating the reinforcing cords f with rubber to form a strip material S, a reference numeral 3 is a drawing unit for drawing out the strip material S, a reference numeral 4 is a festooner for temporarily retaining the strip material S, a reference numeral 5 is a regular-length feeding unit for intermittently feeding the strip material S, and a reference numeral 6 is a cutting unit for cutting the strip material S with a predetermined angle. These units are almost serially arranged.

In a direction crossing the direction in which the above units are arranged, there is arranged a conveyer 7, which can rotate forward or in reverse for receiving number of strip sections S' cut in a predetermined length. On the conveyer 7, there is mounted a lining and splicing unit 8 for splicing lined strip sections S' along the longitudinal direction to join them.

On the unload side of the conveyer 7, there is provided a belt forming drum 10 for directly receiving a belt member B, corresponding to one tire, by way of an intermediate conveyer 9.

The creel stand 1 supports a plurality of reels, each of which winds the reinforcing cord f, allowing free rotation. The rubber coating unit 2 lines in parallel with a given pitch a plurality of reinforcing cords f drawn out from the creel stand 1, coats them with rubber by extruding unvulcanized rubber, and continuously form the strip material S having a constant width. A cross-sectional shape of the strip material S is a parallelogram, and both ends thereof in the width direction are tapered. A width H of the strip material S can be 5 to 60mm and preferably 10 to 30mm.

To the coating unit 2, the drawing unit 3 is connected. The drawing unit 3 continuously reels out the reinforcing cord f from the creel stand 1 and continuously draws out the strip material S formed by the rubber-coating unit 2 in the direction of arrow X.

To the drawing unit 3 the festooner 4 is connected. The festooner 4 is installed to absorb a difference in speed between a continuous drawing by the drawing unit 3 and an intermittent feeding by the regular-length feeding unit 5. The festooner 4 drives a pair of rollers 4a and 4b with a control based on a quantity of a retained strip material S for suspending an excess of strip material S in a loop-shape in a space 4c formed between these rollers 4a and 4b.

To the festooner 4, the regular-length feeding unit 5 is connected by way of a free roller conveyer. The regular-length feeding unit 5 is able to adjust an intermittent feed length. That is, the regular-length feeding unit 5 intermittently feed the strip material S for each given length according to a belt width. The regular-length feeding unit 5 also is adapted to swivel to both sides around a position O on a cutting position 6a of the cutting unit 6 as a center, as shown by an arrow Y.

The cutting unit 6 cuts the strip material S, carried to the conveyer 7 for each given length by the regular-length feeding unit 5, with a predetermined cutting angle θ in respect to the conveying direction, and consequently forms a plurality of strip sections S' in order. The strip material S is cut in regular length in parallel with the conveying direction of the conveyer 7.

This descriptive embodiment of a belt member supply method is described by referencing Fig. 1. First, a plurality of reinforcing cords f are drawn out from reels supported by the creel stand 1, based on a traction force of the drawing unit 3, and by the rubber-coating unit 2 the reinforcing cords f are coated with unvulcanized rubber, and thus the strip material S having a constant width and a parallelogram cross-sectional shape is formed.

The strip material S having a constant width is carried from drawing unit 3 to festooner 4 for temporary retention, and then intermittently carried for each regular length to the conveyer 7 by the regular-length feeding unit 5. In this moment, the regular-length feeding unit 5 carries the strip material S from a cutting position 6a of the cutting unit 6 to the conveyer 7, for a predetermined length according to a belt width.

A tip end of the strip material S carried to the conveyer 7. by the regular-length feeding unit 5 is cut in the predetermined length with a cutting angle θ. When cutting is finished, a front edge in the conveyer carriage direction (left end) of the cut strip section S' and a rear edge in the conveyer carriage direction (right end) of a previously cut strip section S' are spliced by a splice press (not illustrated in the drawing) of the lining and splicing unit 8.

By splicing an integer number of the strip sections S' cut in the predetermined length with the cutting angle θ in order, a belt member B having one tire length is formed. When the belt member B having one tire length is formed, the belt member B is directly supplied to the belt forming drum 10 by way of the intermediate conveyer 9 which is directly connected to the conveyer 7 and a belt layer of a tire is formed on an outer periphery of the belt forming drum 10.

As described above, by cutting the strip material S in the predetermined length, splicing the strip sections S' to form the belt member B for one tire and directly supplying the belt member B to the belt formation process, there is no need to provide a stock space for temporarily stock the belt member B and it is economical because there is no need to have an intermediate stock of belt member B, and yet it is also possible to meet small-lot tire productions.

To meet small-lot productions, belt members B may be made different in specification, such as cord angle, width and length, for each lot. These belt members B of a plurality of types may be supplied to the forming drum 10 in order.

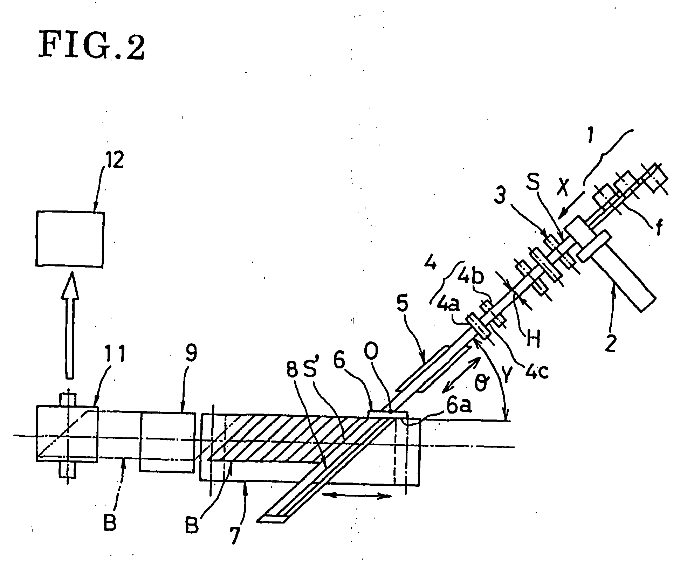

Fig. 2 shows one embodiment of the belt member supply method according to the present invention. In this embodiment, by a method similar to that of the above first embodiment, a belt member B having one tire peripheral length is produced, the belt member B having one tire peripheral length is wound up by winding means 11, such as a winding roll, in production order, with a liner (not illustrated in the drawing) inserted between layers. Then, the winding is carried in order to supply the belt member B to a belt formation process 12, such as a belt forming drum. In winding up a plurality of belt members B to the same winding means 11, it is preferable to wind these belt members B with a space between end portions.

In the case of this embodiment, since the belt member B supplied to the belt formation process is formed for one tire, no measurement and cutting of belt members in regular length is required in the belt formation process and it is possible to lower facility costs by simplifying formation process facilities in construction. Similar to the above first embodiment, it also is possible to meet small-lot tire productions, and it is economical since no excess belt member is generated.

To meet small-lot productions in the second embodiment, the belt member B may be made different in specification, such as cord angle, width and length, for each lot. The belt members B may be stocked by the winding means 11 in such a condition that different kinds of the belt members are mixed. These belt members B may be supplied from the winding means 11 to the belt formation process 12, as needed.

Since other details of configuration and operation are the same as the above descriptive embodiment, the same symbols are attached to them and descriptions are omitted.

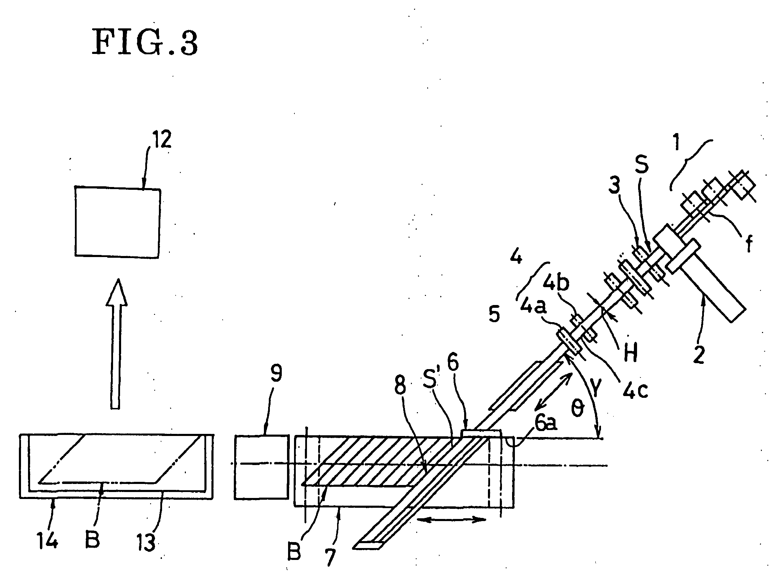

Fig. 3 shows a second embodiment of the belt member supply method of the present invention. In this embodiment, after a belt member B having one tire peripheral length is produced by a method similar to that of the above first embodiment, the belt member B having one tire peripheral length is piled up on a stocker 14 in production order, with separators 13 inserted between layers. Then, the stocker 14 is carried in order to supply the belt member B to a belt formation process 12 in order.

In the case of this embodiment, similar to the above embodiments, since the belt member B supplied to the belt formation process is formed for one tire, no measurement and cutting of belt members in regular length is required in the belt formation process and it is possible to lower facility costs by simplifying formation process facilities in construction. Moreover, similar to the above descriptive embodiment, it is possible to meet small-lot tire productions, and it is economical since no excess belt member is generated.

To meet small-lot productions in the second embodiment, the belt member B may be made different in specification, such as cord angle, width and length, for each lot. The belt members B may be stocked by the stocker 14 in such a condition that different kinds of the belt members are mixed. These belt members B may be supplied from the stocker 14 to belt formation process 12, as needed.

Since other details of configuration and operation are the same as the above embodiments, the same symbols are attached to them and repetitive descriptions are omitted.

One advantage of the present invention to provide a supply method of a belt member that will reduce a stock space and an intermediate stock, reduce facility costs in a belt formation process, and meet small-lot productions.

## Claims

1. A supply method of a belt member (B), comprising the steps of:
forming a plurality of strip sections (S') by cutting a strip material (S), made up with reinforcing cords (f) coated with unvulcanized rubber, to a predetermined length with a predetermined angle (θ), producing a belt member having one tire peripheral length by splicing an integer number of the strip sections under a lined condition in order on a carrier-conveyer (7); **characterized in** the following steps: directly supplying the belt member having one tire peripheral length via an intermediate conveyer (9) to a winding means (11); winding the belt member by the winding means with a liner in production order; and supplying the belt member from the winding to a belt formation process.

2. A supply method of a belt member as claimed in claim 1, wherein belt members of the same specification are continuously formed in said belt member production process.

3. A supply method of a belt member as claimed in claim 1, wherein belt members of different specifications are continuously formed in said belt member production process.

4. A supply method of a belt member (B), comprising the steps of:
forming a plurality of strip sections (S') by cutting a strip material (S), made up with reinforcing cords (f) coated with unvulcanized rubber, to a predetermined length with a predetermined angle (θ); producing a belt member having one tire peripheral length by splicing an integer number of the strip sections under a lined condition in order on a carrier-conveyer (7); **characterized in** the following steps: directly supplying the belt member having one tire peripheral length via an intermediate conveyer (9) to a stocker (14); piling the belt member on the stocker with separators (13) in production order; and supplying the belt member from the stocker to a belt formation process.

5. A supply method of a belt member as claimed in claim 4, wherein belt members of the same specification are continuously formed in said belt member production process.

6. A supply method of a belt member as claimed in claim 4, wherein belt members of different specifications are continuously formed in said belt member production process.

## Patentansprüche

1. Verfahren zum Zuführen eines Gürtelelementes (B), umfassend die Schritte:
Ausformen einer Mehrzahl von Streifenabschnitten (S') durch Schneiden eines Streifenmaterials (S), das mit Verstärkungskorden (f) ausgebildet ist, die mit einem unvulkanisierten Gummi bedeckt sind, in eine vorbestimmte Länge mit einem vorbestimmten Winkel (θ), Herstellen eines eine Reifenumfangslänge aufweisenden Gürtelelementes durch Verbinden einer ganzzahligen Anzahl von Streifenabschnitten unter einer verkleideten Bedingung der Reihe nach auf einem Trägerförderer (7), **gekennzeichnet durch** die folgenden Schritte: direktes Zuführen des eine Reifenumfangslänge aufweisenden Gürtelelementes mittels eines Zwischenförderers (9) auf ein Wickelmittel (11), Aufwickeln des Gürtelelementes zusammen mit einem Trägermaterial in einer Produktionsreihenfolge mittels des Wickelmittels, und Zuführen des Gürtelelements zu einem Gürtelausformungsprozess von der Wicklung aus.

2. Verfahren zum Zuführen eines Gürtelelementes gemäß Anspruch 1, wobei Gürtelelemente der gleichen Spezifikation kontinuierlich in dem Gürtelelementherstellungsprozess geformt werden.

3. Verfahren zum Zuführen eines Gürtelelementes gemäß Anspruch 1, wobei Gürtelelemente unterschiedlicher Spezifikationen kontinuierlich in dem Gürtelelementherstellungsprozess geformt werden.

4. Verfahren zum Zuführen eines Gürtelelementes (B) umfassend die Schritte:
Ausformen einer Mehrzahl von Streifenabschnitten (S') durch Schneiden eines Streifenmaterials (S), das mit Verstärkungskorden (f) ausgebildet ist, die mit unvulkanisiertem Gummi bedeckt sind, in eine vorbestimmte Länge mit einem vorbestimmten Winkel (θ), Herstellen eines eine Reifenumfangslänge aufweisenden Gürtelelementes durch Verbinden einer ganzzahligen Anzahl von Streifenabschnitten unter einer verkleideten Bedingung der Reihe nach auf einem Trägerförderer (7), **gekennzeichnet durch** die folgenden Schritte: direktes Zuführen des eine Reifenumfangslänge aufweisenden Gürtelelementes mittels eines Zwischenförderers (9) zu einem Stapler (14), Aufstapeln des Gürtelelementes mit Separatoren (13) in der Produktionsreihenfolge auf dem Stapler, und Zuführen des Gürtelelementes zu einem Gürtelausformungsprozess von dem Stapler aus.

5. Verfahren zum Zuführen eines Gürtelelementes gemäß Anspruch 4, wobei Gürtelelemente der gleichen Spezifikation kontinuierlich in dem Gürtelelementherstellungsprozess geformt werden.

6. Verfahren zum Zuführen eines Gürtelelementes gemäß Anspruch 4, wobei Gürtelelemente unterschiedlicher Spezifikationen kontinuierlich in dem Gürtelelementherstellungsprozess geformt werden.

## Revendications

1. Procédé pour l'alimentation d'une nappe d'armature (B), comprenant les étapes consistant à:
former plusieurs sections de bande (S') en coupant un matériau de bande (S), présentant des cordes de renforcement (f) revêtues de caoutchouc non vulcanisé, en une longueur prédéterminée selon un angle prédéterminé (θ),
produire une nappe d'armature ayant une longueur périphérique de bandage par une épissure d'un nombre entier de sections de bande sous un état doublé dans l'ordre sur un convoyeur-porteur (7);
**caractérisé par** les étapes suivantes:
amener directement la nappe d'armature ayant une longueur périphérique de bandage par un convoyeur intermédiaire (9) sur un moyen d'enroulement (11);
enrouler la nappe d'armature par le moyen d'enroulement avec une doublure dans l'ordre de production; et
amener la nappe d'armature de l'enroulement à un processus de formation de nappe d'armature.

2. Procédé pour l'alimentation d'une nappe d'armature selon la revendication 1, où des nappes d'armature de la même spécification sont formées continuellement pendant ledit processus de fabrication de nappe d'armature.

3. Procédé pour l'alimentation d'une nappe d'armature selon la revendication 1, où des nappes d'armature de spécifications différentes sont formées continuellement pendant ledit processus de fabrication de nappe d'armature.

4. Procédé pour l'alimentation d'une nappe d'armature (B), comprenant les étapes consistant à:
former plusieurs sections de bande (S') en coupant un matériau de bande (S), présentant des cordes de renforcement (f) revêtues de caoutchouc non vulcanisé, en une longueur prédéterminée selon un angle prédéterminé (θ);
produire une nappe d'armature présentant une longueur périphérique de bandage par une épissure d'un nombre entier de sections de bande sous un état doublé dans l'ordre sur un convoyeur-porteur (7);
**caractérisé par** les étapes suivantes:
amener directement la nappe d'armature ayant une longueur périphérique de bandage par un convoyeur intermédiaire (9) à un dispositif de stockage (14);
empiler la nappe d'armature sur le dispositif de stockage avec des séparateurs (13) dans l'ordre de production; et
amener la nappe d'armature du dispositif de stockage à un processus de formation de nappe d'armature.

5. Procédé pour l'alimentation d'une nappe d'armature selon la revendication 4, où des nappes d'armature de la même spécification sont formées continuellement pendant ledit processus de production de nappes d'armature.

6. Procédé pour l'alimentation d'une nappe d'armature selon la revendication 4, où des nappes d'armature de spécifications différentes sont formées continuellement pendant ledit processus de fabrication de nappes d'armature.
